# EUROPEAN PATENT SPECIFICATION

(11) **EP 4 261 992 B1**
(45) Date of publication and mention of the grant of the patent: **18.02.2026**
(21) Application number: 23162868.6
(22) Date of filing: 20.03.2023
(51) Int. Cl.: H01M 50/204, H01M 50/233, H01M 50/242

(54) **BATTERY MODULE CASE AND BATTERY MODULE COMPRISING THE SAME**
BATTERIEMODULGEHÄUSE UND BATTERIEMODUL DAMIT
BOÎTIER DE MODULE DE BATTERIE ET MODULE DE BATTERIE LE COMPRENANT

(30) Priority: 22.03.2022 KR 20220035658
(43) Date of publication of application: 18.10.2023
(73) Proprietor: SK On Co., Ltd., Seoul 03161 (KR)
(72) Inventor: YUN, Jeong Hyeon, Daejeon 34124 (KR); KIM, Kyu Beom, Daejeon 34124 (KR); RYOU, Chae Rin, Daejeon 34124 (KR); YUN, Hyea Won, Daejeon 34124 (KR); LEE, Ji Hyeon, Daejeon 34124 (KR); IM, Jong Chan, Daejeon 34124 (KR)
(74) Representative: Prüfer & Partner mbB Patentanwälte · Rechtsanwälte

(56) References cited:
- EP-A1- 3 783 728
- US-A1- 2011 159 348
- US-A1- 2012 115 004

## Description

### BACKGROUND

### 1. Technical Field

The present disclosure relates to a battery module.

### 2. Related Art

With development of electronics, communications, and space industries, the demand for secondary batteries as an energy power source is rapidly increasing. In particular, the demand for high-energy density batteries is increasing, and research on battery modules is actively underway.

The battery module may include one or more battery cells and a battery module case for protecting the battery cells. Generally, the battery module case has a structure surrounding the battery cell. Meanwhile, depending on the use environment (cycle, etc.) of the battery cell, the volume of the battery cell may expand, which may cause damage to the battery module case or battery cell. There is an issue in that manufacturing cost or weight may increase when using a material that reinforces the strength of the battery module case or battery cell, so another approach is required.

Documents US 2012/115004 A1, US 2011/159348 A1, and EP 3 783 728 A1 respectively disclose a battery module comprising a plurality of battery cells stacked in a horizontal direction, end plates disposed on both ends of the plurality of battery cells, a cover disposed on one surface of the end plates and having at least one hole therein, and a coupling part coupled to an end plate through one hole. The length of the hole in the horizontal direction is longer than a length of the hole in a vertical direction or in a height direction. The coupling part comprises a head being in contact with a peripheral area of the hole in the cover.

### SUMMARY

Embodiments provide a battery module capable of preventing deformation or damage due to swelling inside the battery module (for example, due to swelling of a battery cell).

In accordance with the invention, there is provided a battery module according to claim 1, including a plurality of battery cells stacked in a horizontal direction, a plurality of end plates disposed on both ends of the plurality of battery cells, a cover disposed on one surface of each of the plurality of end plates and having at least one hole formed therein, and a coupling part coupled to one of the plurality of end plates through the at least one hole.

When a pressure equal to or greater than a reference value is applied to the plurality of end plates in the one direction, a distance between the plurality of end plates is changed.

In an embodiment, the reference value may be a value included in a range of 10 kN or more and less than 40 kN.

In an embodiment, when at least one of the plurality of battery cells expands, a location of the coupling part may be changed in the at least one hole.

The coupling part includes a body and a head having a larger area than the body, the body passes through the at least one hole and is coupled to a fixing hole formed in one of the plurality of end plates, and the head is in contact with a peripheral area of the at least one hole.

The peripheral area has a different coefficient of friction depending on a location in the one direction.

In an embodiment, at least one of the plurality of end plates may include a bump formed on one surface different from the one surface, the cover may include a plurality of recessed parts disposed in the one direction, and the bump may be accommodated in one of the plurality of recessed parts.

In an embodiment, when at least one of the plurality of battery cells expands, the bump may be accommodated in another one of the plurality of recessed parts.

According to the invention, it is possible to provide a battery module capable of preventing deformation or damage due to swelling inside a battery module, for example, due to swelling of a battery cell. In addition, it is possible to improve cycle performance of a battery cell by automatically adjusting the pressure applied to the battery cell.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a diagram for explaining a battery module in accordance with an embodiment of the present disclosure.
FIG. 2 is a diagram for explaining a battery module case in accordance with an embodiment of the present disclosure.
FIG. 3 is a diagram for explaining a battery module case in accordance with an embodiment of the present disclosure.
FIG. 4 is a diagram for explaining a battery module in accordance with an embodiment of the present disclosure.
FIG. 5 is a diagram for explaining an initial state of a battery module in accordance with an embodiment of the present disclosure.
FIG. 6 is a diagram for explaining a later state of a battery module in accordance with an embodiment of the present disclosure.
FIG. 7 is a diagram for explaining a bump in accordance with an embodiment of the present disclosure.
FIG. 8 is a diagram for explaining a battery cell in accordance with an embodiment of the present disclosure.
FIG. 9 is a diagram for explaining a battery cell in accordance with an embodiment of the present disclosure.

### DETAILED DESCRIPTION

The specific structural or functional description disclosed herein is merely illustrative for the purpose of describing embodiments according to the concept of the present disclosure. The embodiments according to the concept of the present disclosure can be implemented in various forms, and cannot be construed as limited to the embodiments set forth herein.

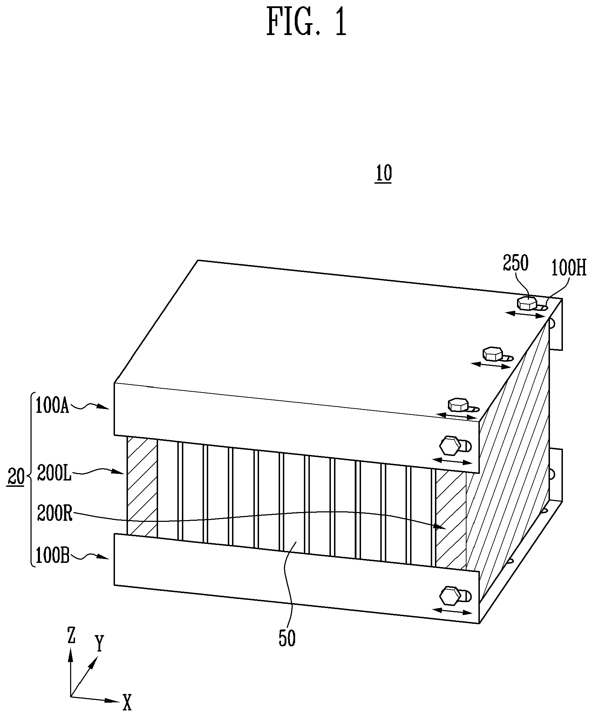

FIG. 1 is a diagram for explaining a battery module in accordance with an embodiment of the present disclosure.

Referring to FIG. 1, a battery module 10 according to an embodiment of the present disclosure includes at least one battery cell 50 and may include a battery module case 20. The battery module 10 may supply power to various electronic devices.

The battery cell 50 may be the smallest unit of a battery capable of charging and discharging. For example, the battery cell 50 may be composed of a battery such as a lithium ion battery, a lithium ion polymer battery, a nickel cadmium battery, a nickel zinc battery, and the like. The number of battery cells 50 may be one or plural. When there are a plurality of battery cells 50, they may be electrically connected to each other in series or parallel.

The battery cell 50 may be accommodated in the internal space of the battery module case 20. The plurality of battery cells 50 are stacked in one direction. The one direction is a horizontal direction. Specifically, the plurality of battery cells 50 is disposed in the horizontal direction in the internal space of the battery module case 20. Here, the horizontal direction is the X-axis direction. The plurality of battery cells 50 may be disposed parallel to each other. In an embodiment, auxiliary materials such as a buffer material and a cooling plate may be inserted between the plurality of battery cells 50.

The battery module case 20 accommodates a plurality of battery cells 50 in an internal accommodating space. The battery module case 20 may protect the battery cell 50 from the external environment. For example, the external environment may be heat, moisture, foreign matter, and impact.

The battery module case 20 includes covers 100A and 100B, end plates 200L and 200R, and a coupling part 250.

The covers 100A and 100B are disposed on one surface of each of the end plates 200L and 200R. The covers 100A and 100B may be coupled to the end plates 200L and 200R. In an embodiment, the covers 100A and 100B may be a plate-like structure of one plane. In an embodiment, the covers 100A and 100B may have a structure in which several planes are joined or coupled to each other. In an embodiment, the covers 100A and 100B may have a convex or concave surface structure. However, this is only an embodiment, and the covers100A and 100B may have various structures for forming the accommodating space for the battery cell 50 by coupling with the end plates 200L and 200R.

At least one hole 100H is formed in the covers 100A and 100B. The hole 100H is a long hole extending in the first direction. The long hole has a shape whose length in the horizontal direction is longer than the length in the vertical direction or the length in the height direction. The horizontal direction may be a direction in which the end plates 200L and 200R are spaced apart. Here, the horizontal direction is the X-axis direction, the vertical direction is the Y-axis direction, and the height direction is the Z-axis direction. In an embodiment, the long hole may have a structure through which one side and the other side of the cover 100A, 100B are penetrated.

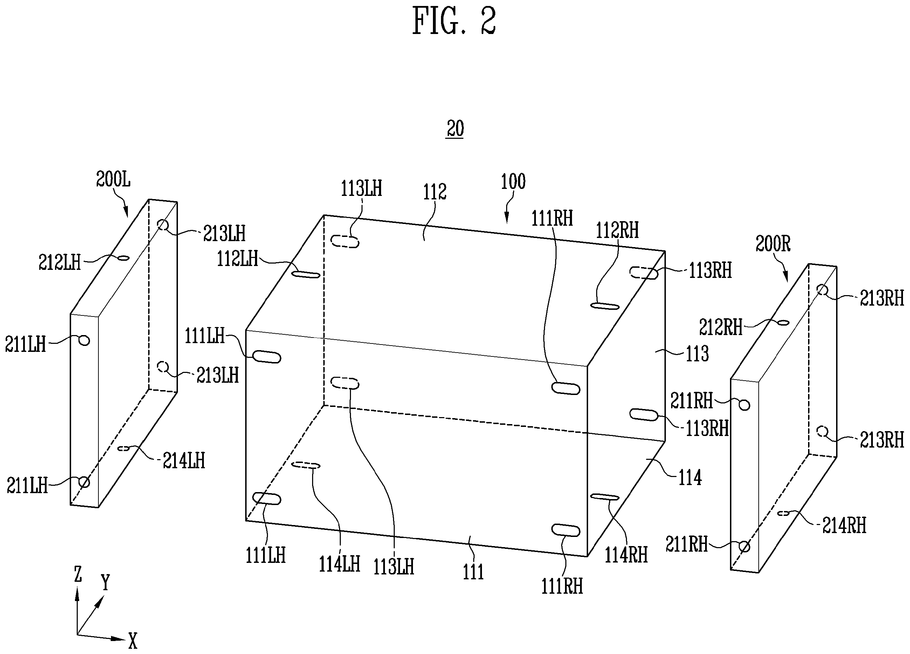

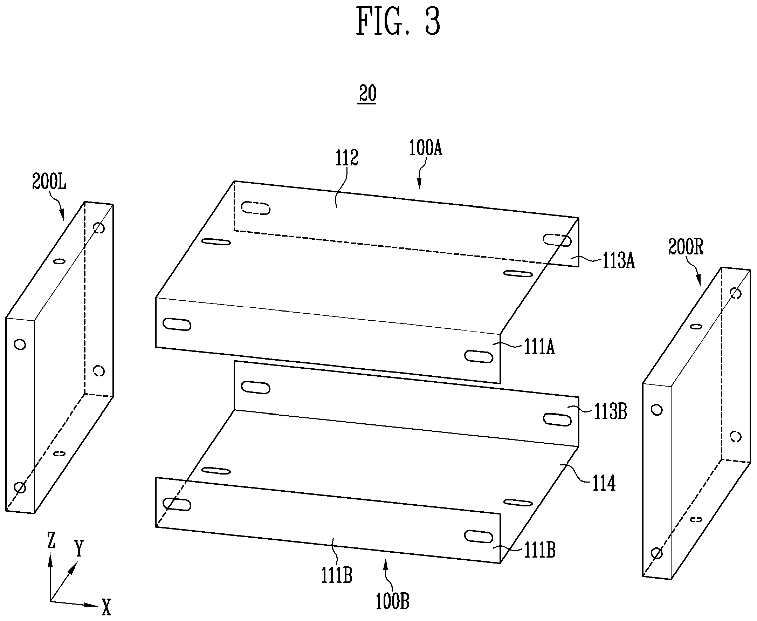

In an embodiment, the covers 100A and 100B may include an upper cover 100A and a lower cover 100B as shown in FIGS. 1 and 3. However, this is only an embodiment, and the covers 100A and 100B may be deformed into various shapes, such as an integral cover 100 of FIG. 2.

The end plates 200L and 200R may be spaced apart from each other in a horizontal direction to accommodate the battery cell 50. In other words, the end plates 200L and 200R may be spaced apart from each other in a horizontal direction to form an accommodating space for the battery cell 50. Here, the horizontal direction may be the X-axis direction. For example, the shape of the end plates 200L and 200R may be longer on the Y-axis and Z-axis than on the X-axis. The shape of the end plates 200L and 200R may be a hexahedron, but is not limited thereto and may be deformed into various shapes such as a disk shape.

The end plates 200L and 200R are disposed at both ends of the battery cell 50. For example, one of the end plates 200L and 200R may be disposed on one end of the battery cell 50, and the other of the end plates 200L and 200R may be disposed on the other end of the battery cell 50.

Specifically, the end plates 200L and 200R may include a first end plate 200L and a second end plate 200R. For example, both ends may include a left end and a right end in the X-axis direction. In this case, the first end plate 200L may be disposed on the left end of the battery cell 50 and the second end plate 200R may be disposed on the right end of the battery cell 50. When the number of battery cells 50 is plural, the first end plate 200L may be disposed on the left end of the entire battery cells 50, and the second end plate 200R may be disposed on the right end of the entire battery cells 50.

The coupling part 250 is coupled to one of the end plates 200L and 200R through the hole 100H. Specifically, the coupling part 250 couples one of the end plates 200L and 200R and the cover 100A, 100B to each other through the hole 100H. For example, a portion of the coupling part 250 may pass through the hole 100H and be fixed to the end plates 200L and 200R. Another portion of the coupling part 250 may contact the peripheral area of the hole 100H. The end plates 200L and 200R and the covers 100A and 100B may be coupled to each other by frictional force between the coupling part 250 and the peripheral area of the hole 100H. For example, the coupling part 250 may be composed of bolts, nuts, or screws.

In an embodiment, each of the end plates 200L and 200R may be coupled to the cover 100A, 100B by a coupling part 250 through a hole 100H. For example, a hole for coupling the first end plate 200L and a hole for coupling the second end plate 200R may be formed in the covers 100A and 100B.

In another embodiment, one of the end plates 200L and 200R may be coupled to the cover 100A, 100B by a coupling part 250 through a hole 100H. In this case, another one of the end plates 200L and 200R may be coupled to the cover 100A, 100B by welding or screwing.

When manufacturing the battery module 10, the end plates 200L and 200R may be coupled to the cover 100A, 100B using the coupling part 250 so that the end plates 200L and 200R apply pressure to the battery cell 50 in the horizontal direction. Here, the magnitude of the pressure may be included in the initial reference range value. In addition, the end plates 200L and 200R may be coupled to the cover 100A, 100B by the pressure. The initial reference range value may be preset. Meanwhile, the end plates 200L and 200R may receive pressure from the battery cell 50 in the horizontal direction by the reaction.

Meanwhile, swelling may occur in the battery cell 50 depending on the use environment. For example, swelling may refer to a phenomenon in which the volume of the battery cell 50 expands due to vaporization of the electrolyte inside the battery cell 50. For example, the use environment may be a use cycle, overcharge, overdischarge, high temperature, short circuit, static electricity, foreign matter, impact, or aging. The battery cell 50 in which swelling occurs may expand in volume and apply pressure in the horizontal direction to the end plates 200L and 200R. In other words, when swelling occurs in the battery cell 50, pressure applied to the end plates 200L and 200R may increase.

The end plates 200L and 200R of the present disclosure move when pressure is applied in the horizontal direction. Specifically, when a pressure equal to or greater than a reference value is applied to the end plates 200L and 200R in a horizontal direction, the locations of the end plates 200L and 200R are changed. In other words, the distance between the end plates 200L and 200R is changed. Here, the coupling part 250 may move within the hole 100H. In other words, the location of the coupling part 250 in the hole 100H may be changed by moving the coupling part 250 in the horizontal direction. Here, the reference value may be a value corresponding to the frictional force.

The reference value may be set according to the pressure caused by swelling of the battery cell 50, the strength and failure load of the end plates 200L and 200R, and the lifespan and stability of the battery cell 50. In an embodiment, the pressure of the battery cell 50 due to swelling may gradually increase according to the cycle. For example, when the cycle of the battery cell 50 reaches end of life (EoL), the pressure applied to the battery cell 50 may be 40 kN. In this case, in order to prevent destruction of the end plates 200L and 200R, the reference value may be set to a value within a range of 0 kN or more and less than 40 kN. In addition, since the surface pressure affects the lifespan and stability of the battery cell 50, the reference value may be set to be greater than or equal to a specific value. In a preferred embodiment, the reference value may be a value included in the range of 10 kN or more and less than 40 kN. However, the aforementioned reference value is only an example, and may be modified to various values.

In an embodiment, the pressure applied to the end plates 200L and 200R by the battery cell 50 may be reduced by changing the distance between the end plates 200L and 200R. Due to this, deformation or damage of the battery module case 20 can be prevented. In addition, the cycle performance of the battery cell may be improved by reducing the pressure applied to the battery cell 50 by the battery module case 20.

FIG. 2 is a diagram for explaining a battery module case in accordance with an embodiment of the present disclosure.

Referring to FIG. 2, the battery module case 20 according to an embodiment of the present disclosure may include the cover 100 and the end plates 200L and 200R. FIG. 2 shows the cover 100 and the end plates 200L and 200R separated.

In an embodiment, the cover 100 may have a structure surrounding the front, rear, top and bottom surfaces of each of the end plates 200L and 200R. To this end, the cover 100 may include a front cover 111, a rear cover 113, a top cover 112 and a bottom cover 114. Specifically, the front cover 111 may be a part surrounding the front surface of each of the end plates 200L and 200R, the rear cover 113 may be a part surrounding the rear surface of each of the end plates 200L and 200R, the top cover 112 may be a part surrounding the top surface of each of the end plates 200L and 200R, the bottom cover 114 may be a part surrounding the bottom surface of each of the end plates 200L and 200R.

The front cover 111 and the rear cover 113 may be spaced apart from each other in a vertical direction. For example, the vertical direction may be the Y-axis direction. The top cover 112 and the bottom cover 114 may be spaced apart from each other in a height direction. For example, the height direction may be the Z-axis direction.

The end plates 200L and 200R may include a first end plate 200L and a second end plate 200R. The first end plate 200L and the second end plate 200R may be spaced apart from each other in a horizontal direction. For example, the horizontal direction may be the X-axis direction.

In the first end plate 200L, fixing holes 211LH, 212LH, 213LH, and 214LH may be formed. For example, the fixing holes 211LH, 212LH, 213LH, 214LH of the first end plate 200L may include a fixing hole 211LH formed on the front surface of the first end plate 200L, a fixing hole 213LH formed on the rear surface of the first end plate 200L, a fixing hole 212LH formed on the top surface of the first end plate 200L, and a fixing hole 214LH formed on the bottom surface of the first end plate 200L.

In the second end plate 200R, fixing holes 211RH, 212RH, 213RH, and 214RH may be formed. For example, the fixing holes 211RH, 212RH, 213RH, and 214RH of the second end plate 200R may include a fixing hole 211RH formed on the front surface of the second end plate 200R, a fixing hole 213RH formed on the rear surface of the second end plate 200R, a fixing hole 212RH formed on the top surface of the second end plate 200R, and a fixing hole 214RH formed on the bottom surface of the second end plate 200R.

In the front cover 111, holes 111LH, 111RH extending in the horizontal direction may be formed. In the rear cover 113, holes 113LH, 113RH extending in the horizontal direction may be formed. In the top cover 112, holes 112LH and 112RH extending in the horizontal direction may be formed. In the bottom cover 114, holes 114LH and 114RH extending in the horizontal direction may be formed.

In an embodiment, the fixing holes 211LH, 212LH, 213LH, and 214LH of the first end plate 200L and the holes 111LH, 112LH, 113LH, and 114LH of the cover 100 may be arranged to overlap at corresponding locations, and then the first end plate 200L may be coupled to the cover 100 by the coupling part 250. The fixing holes 211RH, 212RH, 213RH, and 214RH of the second end plate 200R and the holes 111RH, 112RH, 113RH, and 114RH of the cover 100 may be arranged to overlap at corresponding locations, and then the second end plate 200R may be coupled to the cover 100 by the coupling part 250.

For example, after locating the first hole 111LH of the front cover 111 on the fixing hole 211LH formed on the front surface of the first end plate 200L, the coupling part 250 may be fixed by inserting the body of the coupling part 250 into the fixing hole 211LH formed on the front surface of the first end plate 200L through the first hole 111LH. In the same manner, the end plates 200L and 200R may be coupled to the cover 100 by the coupling part 250 by overlapping the holes 112LH, 113LH, 114LH, 111RH, 112RH, 113RH, 114RH of the cover 100 corresponding to the other fixing holes 212LH, 213LH, 214LH, 211RH, 212RH, 213RH, 214RH of the end plates 200L and 200R.

In an embodiment, the length of the fixing holes 211LH, 212LH, 213LH, 214LH, 211RH, 212RH, 213RH, and 214RH of the end plates 200L and 200R in the horizontal direction may be smaller than the length of the holes 111LH, 112LH, 113LH, 114LH, 111RH, 112RH, 113RH, and 114RH of the cover 100 in the horizontal direction. In other words, the fixing holes 211LH, 212LH, 213LH, 214LH, 211RH, 212RH, 213RH, and 214RH of the end plates 200L and 200R may be short holes.

In an embodiment, the fixing holes 211LH, 212LH, 213LH, 214LH, 211RH, 212RH, 213RH, and 214RH of the end plates 200L and 200R may have a structure having a height and an area capable of accommodating the coupling part 250. The fixing holes 211LH, 212LH, 213LH, 214LH, 211RH, 212RH, 213RH, and 214RH of the end plates 200L and 200R may have threads for fixing the coupling part 250.

Meanwhile, the number and locations of the holes 111LH, 112LH, 113LH, 114LH, 111RH, 112RH, 113RH, and 114RH corresponding to the above-described fixing holes 211LH, 212LH, 213LH, 214LH, 211RH, 212RH, 213RH, and 214RH are only examples and may be modified in various ways.

FIG. 3 is a diagram for explaining a battery module case in accordance with an embodiment of the present disclosure.

Referring to FIG. 3, the battery module case 20 according to the present disclosure may include the covers 100A and 100B and the end plates 200L and 200R. FIG. 3 shows the covers 100A and 100B and the end plates 200L and 200R separately.

In an embodiment, the covers 100A and 100B may include the upper cover 100A and the lower cover 100B. In other words, unlike FIG. 2, the cover 100A, 100B may be deformed into separate structures such as the upper cover 100A and the lower cover 100B.

The upper cover 100A may have a structure that surrounds a top surface, a portion of the front surface, and a portion of the rear surface of each of the end plates 200L and 200R. The lower cover 100B may have a structure that surrounds the bottom surface, another portion of the front surface, and another portion of the rear surface of each of the end plates 200L and 200R.

To this end, the upper cover 100A may include a first front cover 111A, a first rear cover 113A, and the top cover 112. The lower cover 100B may include a second front cover 111B, a second rear cover 113B, and the bottom cover 114.

Specifically, the first front cover 111A may be a portion surrounding a portion of the front surface of each of the end plates 200L and 200R, the first rear cover 113 may be a portion surrounding a portion of the rear surface of each of the end plates 200L and 200R, and the top cover 112 may be a portion surrounding the top surface of each of the end plates 200L and 200R. The second front cover 111B may be a portion surrounding another portion of the front surface of each of the end plates 200L and 200R, the second rear cover 113B may be a portion surrounding another portion of the rear surface of each of the end plates 200L and 200R, and the bottom cover 114 may be a portion surrounding the bottom surface of each of the end plates 200L and 200R.

Hereinafter, for convenience of description, it is assumed that the cover has the structure of FIG. 2 and will be described.

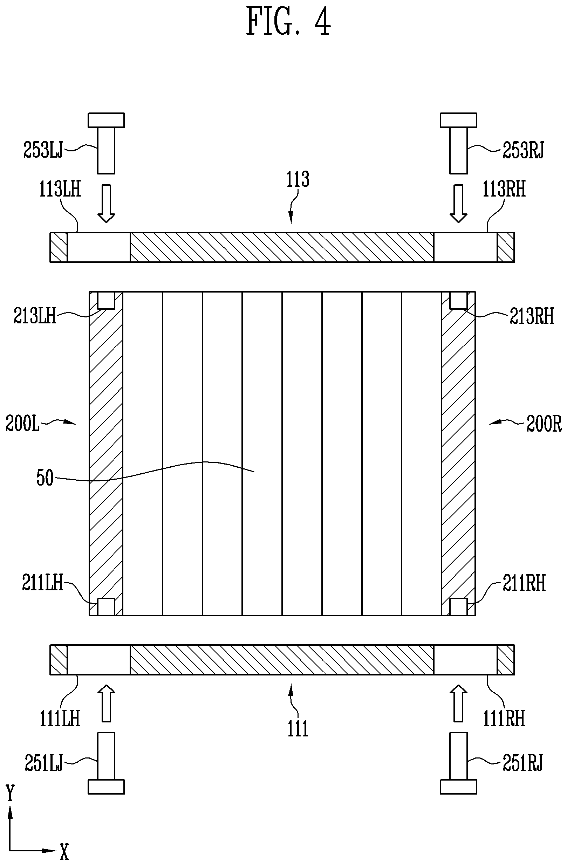

FIG. 4 is a diagram for explaining a battery module in accordance with an embodiment of the present disclosure. FIG. 4 is a cross-sectional view of the battery module 10 on the XY plane according to an embodiment.

Referring to FIG. 4, the end plates 200L and 200R may be spaced apart in the horizontal direction. A plurality of battery cells 50 may be disposed in the accommodating space formed between the end plates 200L and 200R. Fixing holes 211LH, 213LH, 211RH, and 213RH may be formed on one surface of the end plates 200L and 200R.

The front cover 111 of the cover 100 may be disposed on one surface of the end plates 200L and 200R. The front cover 111 of the cover 100 may have holes 111LH and 111RH extending in which the end plates 200L and 200R are spaced apart. The spaced apart direction is a horizontal direction, and may be, for example, an X-axis direction.

Specifically, the front cover 111 of the cover 100 may be disposed such that the first hole 111LH overlaps the first fixing hole 211LH formed on the front surface of the first end plate 200L and the second hole 111RH overlaps the second fixing hole 211RH formed on the front surface of the second end plate 200R. In addition, the first coupling part 251LJ may be inserted into the first fixing hole 211LH through the first hole 111LH and coupled to the first end plate 200L. The second coupling part 251RJ may be inserted into the second fixing hole 211RH through the second hole 111RH and coupled to the second end plate 200R.

The rear cover 113 of the cover 100 may be disposed on the other surface of the end plates 200L and 200R. The rear cover 113 of the cover 100 may have holes 113LH and 113RH extending in a direction in which the end plates 200L and 200R are spaced apart. The spaced apart direction is a horizontal direction, and may be, for example, an X-axis direction.

Specifically, the rear cover 113 of the cover 100 may be disposed such that the first hole 113LH overlaps the first fixing hole 213LH formed on the front surface of the first end plate 200L and the second hole 113RH overlaps the second fixing hole 213RH formed on the front surface of the second end plate 200R. In addition, the first coupling part 253LJ may be inserted into the first fixing hole 213LH through the first hole 113LH and coupled to the first end plate 200L. The second coupling part 253RJ may be inserted into the second fixing hole 213RH through the second hole 113RH and coupled to the second end plate 200R.

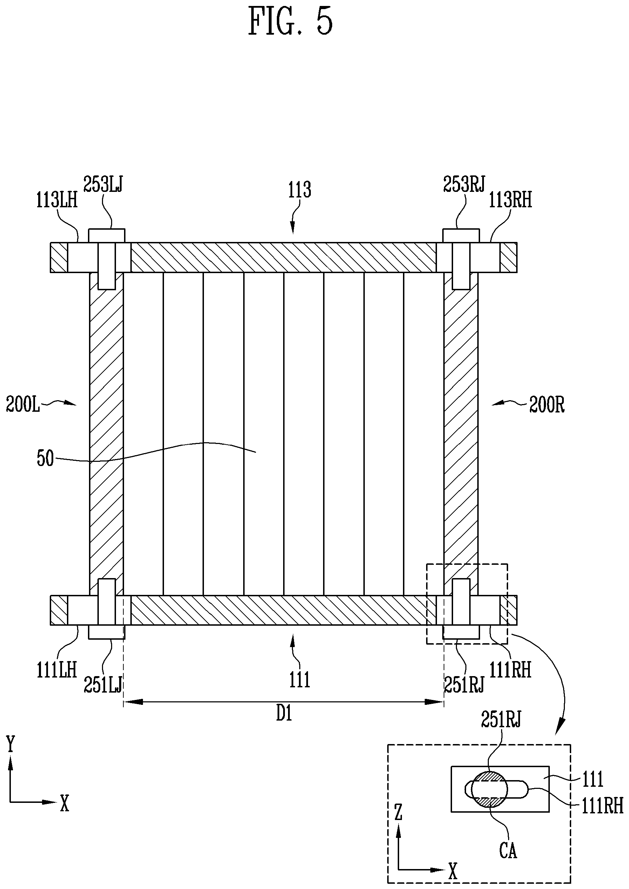

FIG. 5 is a diagram for explaining an initial state of a battery module in accordance with an embodiment of the present disclosure. FIG. 5 is a cross-sectional view of the battery module 10 on the XY plane according to an embodiment.

Referring to FIG. 5, the front cover 111 and the rear cover 113 of the cover 100 and the end plates 200L and 200R may be coupled to each other by coupling parts 251LJ, 253LJ, 251RJ, and 253RJ through holes 111LH, 113LH, 111RH, and 113RH.

The coupling part 251LJ, 253LJ, 251RJ, 253RJ includes a body and includes a head.

The body of the coupling part 251LJ, 253LJ, 251RJ, 253RJ passes through the hole 111LH, 113LH, 111RH, 113RH and is coupled to the fixing hole (211LH, 213LH, 211RH, 213RH in FIG. 4) formed in the end plate 200L, 200R.

The head of the coupling part 251LJ, 253LJ, 251RJ, 253RJ is in contact the peripheral area of the hole 111LH, 113LH, 111RH, 113RH. The head of the coupling part 251LJ, 253LJ, 251RJ, 253RJ may have a larger area than the body. In other words, the head of the coupling part 251LJ, 253LJ, 251RJ, 253RJ may be located at a height protruding outward from the hole 111LH, 113LH, 111RH, 113RH, and may have a larger length in a direction different from the horizontal direction than that of the hole 111LH, 113LH, 111RH, 113RH.

For example, referring to the XZ plane of FIG. 5, the head of the second coupling part 251RJ may contact the peripheral area CA of the second hole 111RH in the front cover 111. The head of the second coupling part 251RJ have a larger length in the Z-axis direction different from the X-axis direction than the second hole 111RH. The front cover 111 and the second end plate 200R may be coupled due to frictional force between the peripheral area CA and the head of the second coupling part 251RJ.

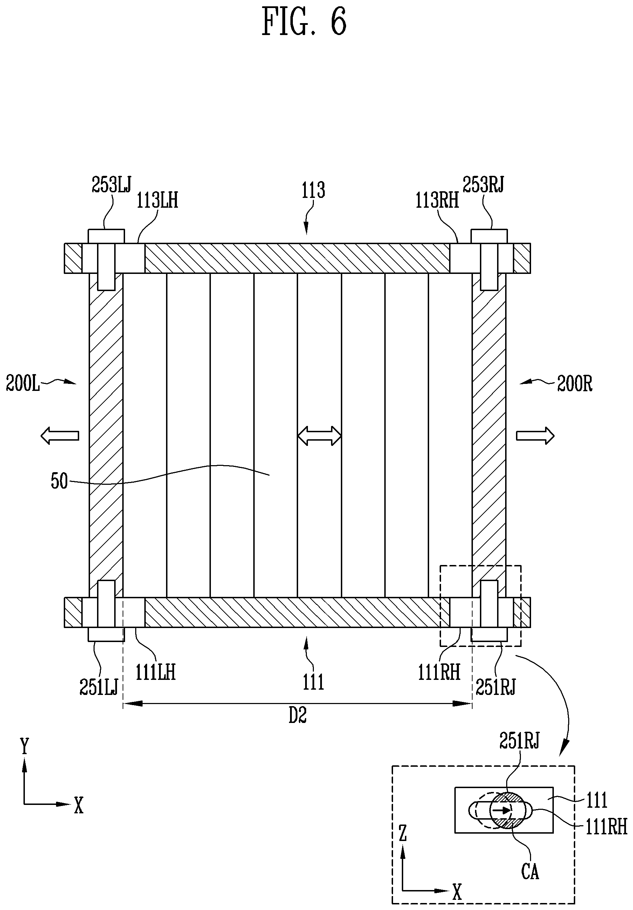

FIG. 6 is a diagram for explaining a later state of a battery module in accordance with an embodiment of the present disclosure. FIG. 6 is a cross-sectional view of the battery module 10 on the XY plane according to an embodiment.

Referring to FIG. 6, swelling may occur in the battery cell 50 and the volume of the battery cell 50 may expand in a horizontal direction. In this case, the pressure applied by the battery cell 50 to the end plates 200L and 200R may be increased.

When pressure greater than a reference value is applied to the end plates 200L and 200R in a horizontal direction, the distance between the end plates 200L and 200R is changed. Here, the reference value may be a value corresponding to the frictional force. For example, the reference value may be proportional to the coefficient of friction of the peripheral area CA.

In an embodiment, when a pressure equal to or greater than a reference value is applied to the end plates 200L and 200R in a horizontal direction, the distance between the end plates 200L and 200R may be changed from the first distance D1 of FIG. 5 to the second distance D2 of FIG. 6. The first distance D1 may be a distance in an initial state, and the second distance D2 may be a greater value than the first distance D1.

For example, the first end plate 200L may move to the left and the second end plate 200R may move to the right. As the distance between the first end plate 200L and the second end plate 200R gradually increases, the pressure may gradually decrease. When the pressure becomes less than the reference value, the movement of the first end plate 200L and the second end plate 200R may be stopped.

In an embodiment, when a pressure equal to or greater than a reference value is applied to the end plates 200L and 200R in a horizontal direction, the location of the coupling part 251LJ, 253LJ, 251RJ, 253RJ within the hole 111LH, 113LH, 111RH, 113RH may be changed. In other words, the coupling part 251LJ, 253LJ, 251RJ, 253RJ may move in the horizontal direction within the hole 111LH, 113LH, 111RH, 113RH. Here, the location may be the center location of the coupling part 251LJ, 253LJ, 251RJ, 253RJ, but this is only an example and may be specified in various locations.

For example, referring to the XZ plane of FIG. 6, when at least one of the plurality of battery cells 50 expands and a pressure equal to or greater than a reference value is applied to the end plates 200L and 200R in the horizontal direction, the second coupling part 251RJ may move in the +X-axis direction within the second hole 111RH. In this case, the second end plate 200R may move in the +X-axis direction together with the second coupling part 251RJ.

The peripheral area CA has different coefficients of friction according to locations in a spaced apart direction or a horizontal direction. The spaced apart direction or horizontal direction is the X-axis direction.

According to the invention, the peripheral area CA has a larger coefficient of friction as the location is farther from the center of the cover. For example, the peripheral area CA has a larger coefficient of friction as it moves away from the center of the front cover 111 along the X-axis direction. In this case, the coefficient of friction of the peripheral area CA located on the right side may have a greater value than that on the left side. As the coefficient of friction increases, the frictional force increases, so that a greater pressure may be required to move the end plates 200L and 200R.

In an embodiment, the peripheral area CA may have one of a first coefficient of friction and a second coefficient of friction. The second coefficient of friction may be a value greater than the first coefficient of friction. In one example, the peripheral area CA may gradually increase from a first coefficient of friction to a second coefficient of friction as the location is farther from the center of the cover. In one example, as the location of the peripheral area CA is farther from the center of the cover, an area having a first coefficient of friction and an area having a second coefficient of friction may be repeated every predetermined section.

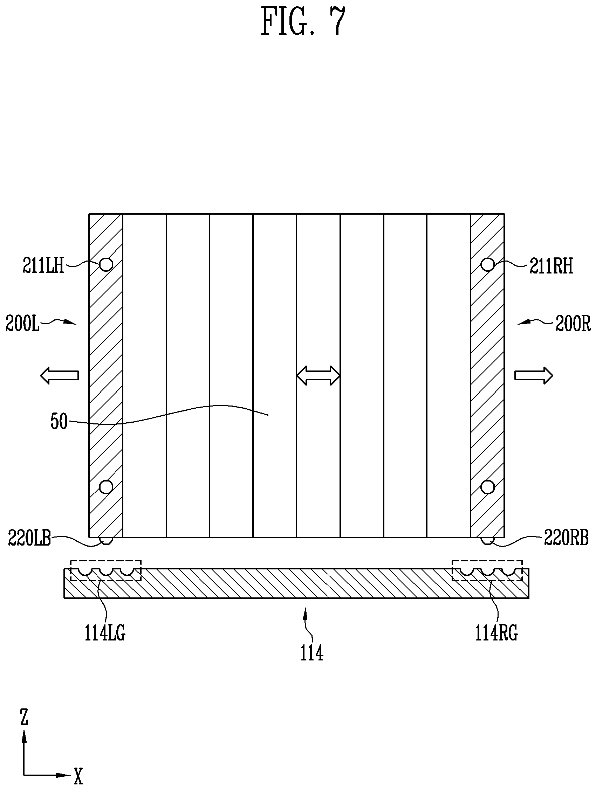

FIG. 7 is a diagram for explaining a bump in accordance with an embodiment of the present disclosure. FIG. 7 is a cross-sectional view of the battery module 10 on the XZ plane according to an embodiment.

Referring to FIG. 7, in an embodiment, a bump 220LB, 220RB formed on at least one surface of the end plates 200L and 200R may be included. Here, one surface may be another surface from the surface on which the fixing hole 211 LH, 211 RH is formed. For example, the bump 220 LB, 220 RB may be formed at the bottom surface of the end plates 200L and 200R. However, this is only an example, and bumps 220LB, 220RB may be formed on the top and bottom surfaces of the end plates 200L and 200R, respectively. The bump 220LB, 220RB may be accommodated in one of the plurality of recessed parts 114LG and 114RG formed in the cover.

The cover may include a plurality of recessed parts 114LG and 114RG disposed in the horizontal direction. For example, the bottom cover 114 may include a plurality of recessed parts 114LG, 114RG disposed in a spaced apart direction or in a horizontal direction. Here, the spaced apart direction or the horizontal direction may be the X-axis direction.

In an embodiment, when a pressure equal to or greater than a reference value is applied to the end plates 200L and 200R in a horizontal direction, the bump 220LB, 220RB may be accommodated in another one of the plurality of recessed parts 114LG, 114RG. In other words, when at least one of the plurality of battery cells 50 expands, the bump 220LB, 220RB may be accommodated in another one of the plurality of recessed parts 114LG,114RG.

In this case, the bump 220LB, 220RB and the end plates 200L and 200R may move in stages with respect to the plurality of recessed parts 114LG, 114RG. In other words, structures such as the bump 220LB, 220RB and the recessed parts 114LG, 114RG may increase frictional force, and thus effectively brake the movement range of the end plates 200L and 200R.

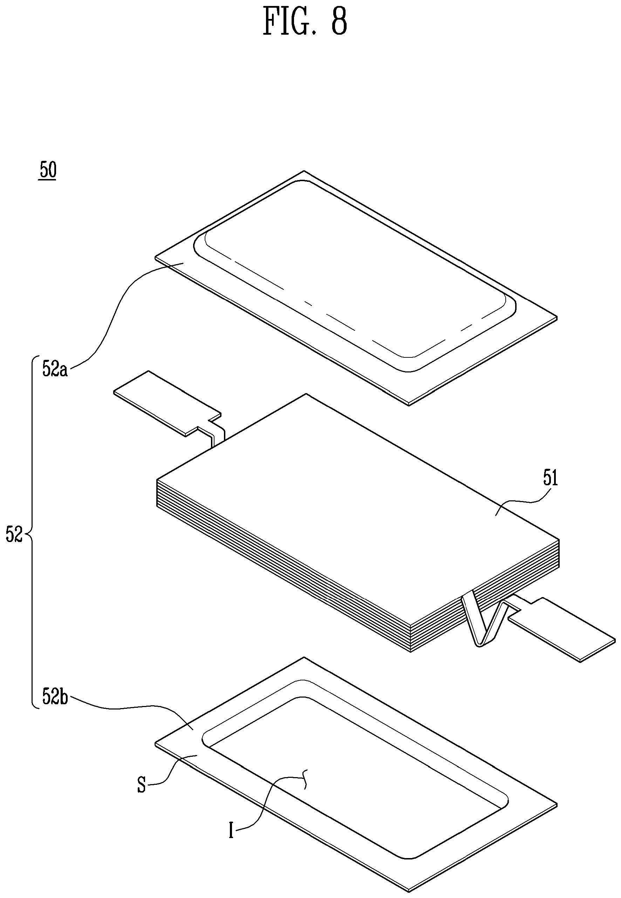

FIG. 8 is a diagram for explaining a battery cell in accordance with an embodiment of the present disclosure.

Referring to FIG. 8, a battery cell 50 according to an embodiment of the present disclosure may include an electrode assembly 51 and an exterior material 52.

The electrode assembly 51 may have a form in which one or more cathodes and one or more anodes are disposed with a separator interposed therebetween. A separator may be located between the cathode and the anode. For example, the electrode assembly 51 may have a structure in which a cathode and an anode are alternately stacked with a separator interposed therebetween.

The exterior material 52 may protect internal elements such as the electrode assembly 51. For example, the exterior material 52 may be configured to include an external insulating layer, a metal layer, and an internal adhesive layer. The exterior material 52 may be a flexible material such as a film.

The exterior material 52 may include an upper exterior material 52a and a lower exterior material 52b, and a concave internal space I may be formed in at least one of the upper exterior material 52a and the lower exterior material 52b. The electrode assembly 51 may be accommodated in the internal space I. Sealing parts S may be formed on the outer circumferential surfaces of the upper exterior material 52a and the lower exterior material 52b The internal space I accommodating the electrode assembly 51 may be sealed by the sealing parts S coupled to each other by adhesion or the like. For example, in a state in which the electrode assembly 51 is accommodated in the internal space I of the upper exterior material 52a and the lower exterior material 52b, sealing parts S may be formed on four outer circumferential surfaces of the lower exterior material 52b that come into contact with the upper exterior material 52a.

Each electrode (cathode or anode) of the electrode assembly 51 is provided with an electrode tab, and one or more electrode tabs may be connected to an electrode lead. The electrode lead may function as an electrode terminal of the battery cell 50 by being located between the sealing parts S of the upper exterior material 52a and the lower exterior material 52b and exposed to the outside of the exterior material 52.

Meanwhile, the above-described battery cell 50 is an example of a pouch type, but this is only an example, and the battery cell 50 may be configured in a cylindrical type, a prismatic type, or the like.

For example, in the case of a cylindrical type, a structure in which a cathode, a separator, and an anode are wound so that the separator is located between the cathode and the anode may be used. For example, in the case of a cylindrical type, the exterior material may have a cylindrical shape. In the case of a prismatic type, a structure in which a cathode, a separator, and an anode are wound so that the separator is located between the anode and the cathode, or a structure in which a cathode, a separator, and an anode are stacked layer by layer may be used. For example, in the case of a prismatic type, the exterior material may have a hexahedral shape.

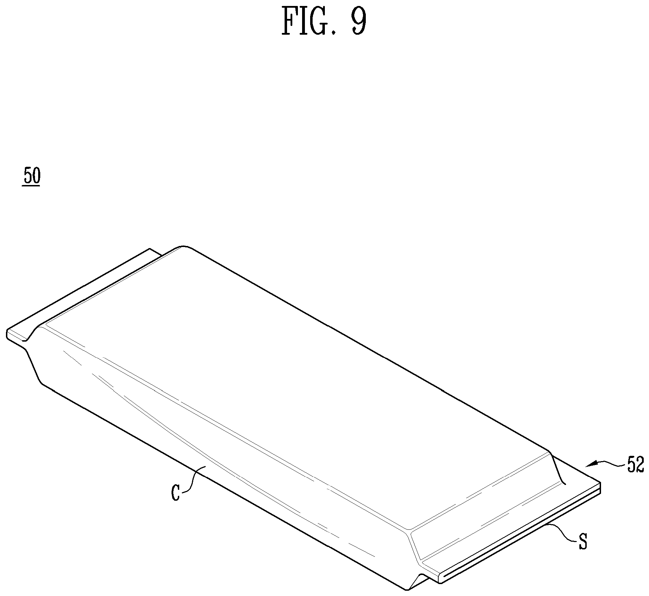

FIG. 9 is a diagram for explaining a battery cell in accordance with an embodiment of the present disclosure. FIG. 9 shows a structure that is sealed in a form different from that of FIG. 8.

Referring to FIG. 9, the battery cell 50 according to an embodiment of the present disclosure may include the exterior material 52 and an electrode assembly accommodated in an internal space of the exterior material 52.

For example, the exterior material 52 may form an internal space and four outer circumference surfaces through folding. A contact part C may be formed on one outer circumferential surface, and a sealing part S may be formed on three outer circumferential surfaces. The contact part C may be a portion where the exterior material 52 is folded. The sealing part S may be a portion in which two surfaces of the exterior material 52 are coupled to each other in a manner such as adhesion.

## Claims

1. A battery module (10) comprising:
a plurality of battery cells (50) stacked in a horizontal direction (X);
a plurality of end plates (200L, 200R) disposed on both ends of the plurality of battery cells (50);
a cover (100A, 100B) disposed on one surface of each of the plurality of end plates (200L, 200R) and having at least one hole (100H, 111LH, 111RH, 112LH, 112RH 113LH, 113RH, 114LH, 114RH) formed therein; and
a coupling part (250, 251LJ, 251RJ, 253U, 253RJ) coupled to one of the plurality of end plates (200L, 200R) through the at least one hole (100H, 111LH, 111RH, 112LH, 112RH 113LH, 113RH, 114LH, 114RH), wherein
a length of the at least one hole (100H, 111LH, 111RH, 112LH, 112RH 113LH, 113RH, 114LH, 114RH) in the horizontal direction (X) is longer than a length of the at least one hole (100H, 111LH, 111RH, 112LH, 112RH 113LH, 113RH, 114LH, 114RH) in a vertical direction (Y) or a height direction (Z),
the coupling part (250, 251U, 251RJ, 253U, 253RJ) comprises a body and a head having a larger area than the body, wherein
the body is configured to pass through the at least one hole (100H, 111LH, 111RH, 112LH, 112RH 113LH, 113RH, 114LH, 114RH) and is coupled to a fixing hole (211LH, 212LH, 213LH, 214LH, 211RH, 212RH, 213RH, 214RH) formed in one of the plurality of end plates (200L, 200R),
the head is in contact with a peripheral area (CA) of the at least one hole (100H, 111LH, 111RH, 112LH, 112RH 113LH, 113RH, 114LH, 114RH) in the cover (100A, 100B),
when a pressure equal to or greater than a reference value is applied to the plurality of end plates (200L, 200R) in the horizontal direction (X), a distance between the plurality of end plates (200L, 200R) is changed, and
the peripheral area (CA) has a larger coefficient of friction as the location is farther from the center of the cover (100A, 100B) along the X-direction.

2. The battery module (10) of claim 1, wherein the reference value is a value included in a range of 10 kN or more and less than 40 kN.

3. The battery module (10) of claim 1 or 2, wherein, when at least one of the plurality of battery cells (50) expands, a location of the coupling part (250, 251LJ, 251RJ, 253LJ, 253RJ) is changed in the at least one hole (100H, 111LH, 111RH, 112LH, 112RH 113LH, 113RH, 114LH, 114RH).

4. The battery module (10) of anyone of claims 1 to 3, wherein
at least one of the plurality of end plates (200L, 200R) comprises a bump (220LB, 220RB) formed on a surface different from the one surface,
the cover (100A, 100B) comprises a plurality of recessed parts (114LG, 114RG) disposed in the horizontal direction (X), and
the bump (220LB, 220RB) is accommodated in one of the plurality of recessed parts (114LG, 114RG).

5. The battery module of claim 4, wherein, when at least one of the plurality of battery cells (50) expands, the bump (220LB, 220RB) is accommodated in another one of the plurality of recessed parts (114LG, 114RG).

## Patentansprüche

1. Batteriemodul (10), aufweisend:
eine Vielzahl von in einer horizontalen Richtung (X) gestapelten Batteriezellen (50);
eine Vielzahl von Endplatten (200L, 200R), die an beiden Enden der Vielzahl von Batteriezellen (50) angeordnet sind;
eine Abdeckung (100A, 100B), die auf einer Fläche von jeder der Vielzahl von Endplatten (200L, 200R) angeordnet ist und mindestens ein darin gebildetes Loch (100H, 111LH, 111RH, 112LH, 112RH, 113LH, 113RH, 114LH, 114RH) hat; und
ein Kopplungsteil (250, 251LJ, 251RJ, 253LJ, 253RJ), das durch das mindestens eine Loch (100H, 111LH, 111RH, 112LH, 112RH, 113LH, 113RH, 114LH, 114RH) mit einer von der Vielzahl von Endplatten (200L, 200R) gekoppelt ist, wobei
eine Länge des mindestens einen Lochs (100H, 111LH, 111RH, 112LH, 112RH, 113LH, 113RH, 114LH, 114RH) in der horizontalen Richtung (X) länger als eine Länge des mindestens einen Lochs (100H, 111LH, 111RH, 112LH, 112RH, 113LH, 113RH, 114LH, 114RH) in einer vertikalen Richtung (Y) oder einer Höhenrichtung (Z) ist,
das Kopplungsteil (250, 251LJ, 251RJ, 253LJ, 253RJ) einen Körper und einen Kopf, der eine größere Fläche als der Körper hat, aufweist, wobei
der Körper dazu konfiguriert ist, durch das mindestens eine Loch (100H, 111LH, 111RH, 112LH, 112RH, 113LH, 113RH, 114LH, 114RH) hindurchzugehen, und mit einem Befestigungsloch (211LH, 212LH, 213LH, 214LH, 211RH, 212RH, 213RH, 214RH) gekoppelt ist, das in einer von der Vielzahl von Endplatten (200L, 200R) gebildet ist,
der Kopf mit einer Peripheriefläche (CA) des mindestens einen Lochs (100H, 111LH, 111RH, 112LH, 112RH, 113LH, 113RH, 114LH, 114RH) in der Abdeckung (100A, 100B) in Kontakt ist,
wenn ein Druck, der gleich oder größer als ein Referenzwert ist, auf die Vielzahl von Endplatten (200L, 200R) in der horizontalen Richtung (X) ausgeübt wird, ein Abstand zwischen der Vielzahl von Endplatten (200L, 200R) geändert wird, und
die Peripheriefläche (CA) in dem Maße einen größeren Reibungskoeffizienten aufweist wie die Örtlichkeit entlang der X-Richtung weiter von der Mitte der Abdeckung (100A, 100B) entfernt ist.

2. Batteriemodul (10) nach Anspruch 1, wobei der Referenzwert ein Wert ist, der in einem Bereich von 10 kN oder mehr und weniger als 40 kN liegt.

3. Batteriemodul (10) nach Anspruch 1 oder 2, wobei, wenn sich mindestens eine von der Vielzahl von Batteriezellen (50) ausdehnt, eine Örtlichkeit des Kopplungsteils (250, 251LJ, 251RJ, 253LJ, 253RJ) in dem mindestens einen Loch (100H, 111LH, 111RH, 112LH, 112RH, 113LH, 113RH, 114LH, 114RH) geändert wird.

4. Batteriemodul (10) nach einem der Ansprüche 1 bis 3, wobei
mindestens eine von der Vielzahl von Endplatten (200L, 200R) einen Höcker (220LB, 220RB) aufweist, der auf einer Fläche ausgebildet ist, die sich von der einen Fläche unterscheidet,
die Abdeckung (100A, 100B) eine Vielzahl von in der horizontalen Richtung (X) angeordneten vertieften Abschnitten (114LG, 114RG) aufweist, und
der Höcker (220LB, 220RB) in einem von der Vielzahl von vertieften Abschnitten (114LG, 114RG) aufgenommen ist.

5. Batteriemodul nach Anspruch 4, wobei, wenn sich mindestens eine von der Vielzahl von Batteriezellen (50) ausdehnt, der Höcker (220LB, 220RB) in einem anderen von der Vielzahl von vertieften Abschnitten (114LG, 114RG) aufgenommen wird.

## Revendications

1. Module de batterie (10) comprenant :
une pluralité d'éléments de batterie (50) empilés dans une direction horizontale (X) ;
une pluralité de plaques d'extrémité (200L, 200R) disposées sur les deux extrémités de la pluralité d'éléments de batterie (50) ;
un couvercle (100A, 100B) disposé sur une surface de chacune de la pluralité de plaques d'extrémité (200L, 200R) et ayant au moins un trou (100H, 111LH, 111RH, 112LH, 112RH, 113LH, 113RH, 114LH, 114RH) formé dans celui-ci ; et
une partie de couplage (250, 251LJ, 251RJ, 253LJ, 253RJ) couplée à l'une de la pluralité de plaques d'extrémité (200L, 200R) à travers l'au moins un trou (100H, 111LH, 111RH, 112LH, 112RH, 113LH, 113RH, 114LH, 114RH), où
une longueur de l'au moins un trou (100H, 111LH, 111RH, 112LH, 112RH, 113LH, 113RH, 114LH, 114RH) dans la direction horizontale (X) est plus longue qu'une longueur de l'au moins un trou (100H, 111LH, 111RH, 112LH, 112RH, 113LH, 113RH, 114LH, 114RH) dans une direction verticale (Y) ou une direction de hauteur (Z),
la partie de couplage (250, 251LJ, 251RJ, 253LJ, 253RJ) comprend un corps et une tête ayant une plus grande superficie que le corps, où
le corps est configuré pour passer à travers l'au moins un trou (100H, 111LH, 111RH, 112LH, 112RH, 113LH, 113RH, 114LH, 114RH) et est couplé à un trou de fixation (211LH, 212LH, 213LH, 214LH, 211RH, 212RH, 213RH, 214RH) formé dans l'une de la pluralité de plaques d'extrémité (200L, 200R),
la tête est en contact avec une zone périphérique (CA) de l'au moins un trou (100H, 111LH, 111RH, 112LH, 112RH, 113LH, 113RH, 114LH, 114RH) dans le couvercle (100A, 100B),
lorsqu'une pression égale ou supérieure à une valeur de référence est appliquée à la pluralité de plaques d'extrémité (200L, 200R) dans la direction horizontale (X), une distance entre la pluralité de plaques d'extrémité (200L, 200R) est modifiée, et
la zone périphérique (CA) a un plus grand coefficient de frottement à mesure que l'emplacement est plus éloigné du centre du couvercle (100A, 100B) le long de la direction X.

2. Module de batterie (10) selon la revendication 1, où la valeur de référence est une valeur comprise dans une plage de 10 kN ou plus et inférieure à 40 kN.

3. Module de batterie (10) selon la revendication 1 ou 2, où, lorsqu'au moins l'un de la pluralité d'éléments de batterie (50) se dilate, un emplacement de la partie de couplage (250, 251LJ, 251RJ, 253LJ, 253RJ) est modifié dans l'au moins un trou (100H, 111LH, 111RH, 112LH, 112RH, 113LH, 113RH, 114LH, 114RH).

4. Module de batterie (10) selon l'une quelconque des revendications 1 à 3, où
au moins l'une de la pluralité de plaques d'extrémité (200L, 200R) comprend une bosse (220LB, 220RB) formée sur une surface différente de l'une surface,
le couvercle (100A, 100B) comprend une pluralité de parties évidées (114LG, 114RG) disposées dans la direction horizontale (X), et
la bosse (220LB, 220RB) est logée dans l'une de la pluralité de parties évidées (114LG, 114RG).

5. Module de batterie selon la revendication 4, où, lorsqu'au moins l'un de la pluralité d'éléments de batterie (50) se dilate, la bosse (220LB, 220RB) est logée dans une autre de la pluralité de parties évidées (114LG, 114RG).
